Europäisches Patentamt

European Patent Office

Office européen des brevets

(19)

(11) **EP 1 243 171 A2**

(12) **EUROPÄISCHE PATENTANMELDUNG**

| | |
|---|---|
| (43) Veröffentlichungstag:<br>**25.09.2002 Patentblatt 2002/39** | (51) Int Cl.$^7$: **A01B 69/00** |

(21) Anmeldenummer: **02006042.2**

(22) Anmeldetag: **16.03.2002**

| | |
|---|---|
| (84) Benannte Vertragsstaaten:<br>**AT BE CH CY DE DK ES FI FR GB GR IE IT LI LU**<br>**MC NL PT SE TR**<br>Benannte Erstreckungsstaaten:<br>**AL LT LV MK RO SI**<br><br>(30) Priorität: **22.03.2001 DE 10114091**<br><br>(71) Anmelder: **DEERE & COMPANY**<br>**Moline, Illinois 61265-8098 (US)**<br><br>(72) Erfinder:<br>• **Bernhardt, Gerd, Prof. Dr. Ing. habil**<br>**01728 Hänichen (DE)** | • **Fedotov, Sergiy**<br>**01069 Dresden (DE)**<br>• **Rudik, Ruslan**<br>**01069 Dresden (DE)**<br>• **Weiss, Heinz**<br>**64625 Bensheim (DE)**<br><br>(74) Vertreter: **Lau-Loskill, Philipp, Dipl.-Phys.**<br>**Deere & Company,**<br>**European Office,**<br>**Patent Department**<br>**68140 Mannheim (DE)** |

(54) **Steuervorrichtung für eine Fahrzeuganbauschnittstelle**

(57)　Es wird eine Steuervorrichtung für eine Anbauschnittstelle (28) zur Kopplung eines Arbeitsgerätes (A) an ein Arbeitsfahrzeug (10) beschrieben, die längenverstellbare Koppelelemente (30, 32, 34) enthält, durch die sich das Arbeitsgerät (A) insbesondere in seitlicher Richtung relativ zum Arbeitsfahrzeug (10) verschieben und/oder verschwenken lässt.

Um bei Kurvenfahrt den äußeren Bahnradius zu verringern, die Überwachung des Anbaugerätes zu erleichtern, und die Gefahr von Kollisionen zu verringern, ist eine Sensorik (14) vorgesehen, welche seitliche Bewegungen des Arbeitsfahrzeugs (10) direkt oder indirekt erfasst. Steuerungsmittel (16) stellen die Länge der Koppelelemente (30, 32, 34) in Abhängigkeit der Sensorsignale automatisch ein, so dass sich die relative Lage des Arbeitsgeräts (A) an die Bahnkurve anpasst.

Fig.3

**EP 1 243 171 A2**

**Beschreibung**

Die Erfindung betrifft eine Steuervorrichtung für eine Anbauschnittstelle zur Kopplung eines Arbeitsgerätes an ein Arbeitsfahrzeug, die wenigstens ein längenverstellbares Koppelement enthält, durch das sich das Arbeitsgerät insbesondere in seitlicher Richtung relativ zum Arbeitsfahrzeug bewegen lässt.

Die Steigerung der heutigen Geräteabmessungen erfordert einen erhöhten Aufwand, um die Lage eines Anbaugerätes zu überwachen. Insbesondere bei Kurvenfahrt können ausladende Arbeits- oder Anbaugeräte seitlich sehr weit ausschwenken. Beispielsweise kann beim Wenden ein an einem üblichen Dreipunktanbau montierter Fünfscharpflug seitlich meterweit ausschwenken. Dieses Ausschwenken führt dazu, dass der für eine Kurvenfahrt des Arbeitsfahrzeugs mit angekoppeltem Arbeitsgerät erforderliche äußere Bahnradius mit steigenden Abmessungen des Arbeitsgerätes zunimmt. Beispielsweise kann bei heutigem Dreipunktanbau der äußere Bahnradius proportional zur Länge des Arbeitsgerätes zunehmen. Die Ausschwenkbewegung ist bei Kurvenfahrt durch die Bedienungsperson zu berücksichtigen, um eine Kollision mit Hindernissen, die im Bereich der Fahrstrecke liegen, zu vermeiden. Insbesondere die rückwärtige Überwachung der Geräteausschwenkung belastet den Fahrer. Trotz dieser Überwachung können Kollisionen nicht immer vermieden werden.

Die US-A-3,432,184 beschreibt eine Anbauvorrichtung für einen Traktor mit einer dreieckförmigen Aufnahmeplatte, an der die Koppelplatte eines Anbaugeräts befestigbar ist. Zwischen dem Traktorrahmen und der Aufnahmeplatte verlaufen sieben in ihrer Länge verstellbare Aktuatoren, die mit ihrem jeweils ersten Ende an vier Anlenkstellen des Traktorrahmens und mit ihrem jeweils anderen Ende an der Aufnahmeplatte angelenkt sind. Wenn der Traktor und das Anbaugerät nicht genau zueinander ausgerichtet sind, kann einer der Aktuatoren betätigt werden, um die Aufnahmeplatte seitlich zu bewegen und die Ausrichtung vorzunehmen. Es werden jedoch keine Hinweise zur Überwindung des oben genannten Problems gegeben.

Die der Erfindung zugrunde liegende Aufgabe wird darin gesehen, eine Steuervorrichtung der eingangs genannten Art anzugeben, durch welche die vorgenannten Probleme überwunden werden. Insbesondere soll die Steuervorrichtung eine Verringerung des äußeren Bahnradius bei Kurvenfahrt und damit eine Verringerung des kleinstmöglichen Wenderadius des Gespanns, welches aus Arbeitsfahrzeug und Arbeitsgerät besteht, ermöglichen. Des weiteren soll bei Kurvenfahrt die Überwachung des Anbaugerätes erleichtert, die Bedienungsperson entlastet und die Gefahr von Kollisionen verringert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Steuervorrichtung ist für eine Anbauschnittstelle zur Kopplung eines Arbeitsgerätes bzw. Anbaugeräts an ein Arbeitsfahrzeug vorgesehen und enthält wenigstens ein längenverstellbares Koppelelement, durch das sich das Arbeitsgerät, insbesondere in seitlicher Richtung relativ zum Arbeitsfahrzeug bewegen lässt. Die Bewegung kann translatorische und/oder rotatorische Anteile enthalten. Die Steuervorrichtung wird mit einer Sensorik ausgestattet, welche seitliche Bewegungen des Fahrzeugs, insbesondere seitliche Relativbewegungen bezüglich des Untergrunds, direkt oder indirekt erfasst. Des weiteren sind Steuerungsmittel vorgesehen, welche die Länge des wenigstens einen längenverstellbaren Koppelelements in Abhängigkeit der Sensorsignale automatisch einstellen.

Die erfindungsgemäße Steuervorrichtung ermöglicht es, das Arbeitsgerät in Abhängigkeit der Sensorsignale automatisch in seitlicher Richtung relativ zum Arbeitsfahrzeug nachzuführen, um beispielsweise auf den Lenkwinkel, die Schwerpunktslage und/oder die Seitenbeschleunigung des Gespanns zu reagieren.

Durch diese automatische Nachführung lässt sich das Arbeitsgerät gezielt relativ zum Arbeitsfahrzeug seitlich verschieben und/oder verschwenken, so dass sich das Arbeitsgerät während der Fahrt automatisch auf die Wendekurve des Arbeitsfahrzeugs ausrichtet. Gleichzeitig lässt sich der Gesamtschwerpunkt des Gespanns positiv beeinflussen.

Durch den Einsatz der erfindungsgemäßen Steuervorrichtung lässt sich insbesondere bei ausladenden Arbeitsgeräten der äußere Bahnradius bei Kurvenfahrt erheblich verringern, so dass das Gespann kleinere Wenderadien durchfahren kann als bisher. Die Bedienungsperson wird entlastet, weil beim Durchfahren von Kurven das Arbeitsgerät weniger weit ausschwenkt und die Gefahr von Kollisionen abnimmt.

Als längenverstellbare Koppelelemente können beispielsweise Hydraulikzylinder, insbesondere doppeltwirkende Hydraulikzylinder, aber auch elektrisch angetriebene Stellglieder verwendet werden.

Die erfindungsgemäße Steuervorrichtung kann im Zusammenhang mit einer Dreipunkt-Anbauvorrichtung verwendet werden, sofern die Unterlenker der Dreipunkt-Anbauvorrichtung durch entsprechende Stellglieder in seitlicher Richtung einstellbar sind. Um einen weiten Einstellbereich zu ermöglichen ist es jedoch von besonderem Vorteil, die Steuervorrichtung im Zusammenhang mit wenigstens sechs längenverstellbaren Koppelelementen zu verwenden, die nach Art eines Hexapoden zwischen Arbeitsfahrzeug und Arbeitsgerät angeordnet sind und durch die sich das Arbeitsgerät in sechs Freiheitsgraden und innerhalb weiter Grenzen bewegen lässt. Eine derartige Hexapod-Anordnung wurde in der nachveröffentlichten deutschen Patentanmeldung 199 51 840.8 ausführlich beschrieben, auf deren Offenbarung hiermit ausdrücklich Bezug genommen wird. Die Hexapod-Anordnung ermöglicht ein mechanisches Verschieben und/oder Verschwenken des Arbeitsgerätes relativ zum Arbeitsfahrzeug in weiten Grenzen, wobei die Längen der Koppelelemente des Hexapoden durch die Steuerungsmittel eingestellt werden.

Für eine optimale Anpassung des Arbeitsgerätes an den Wenderadius des Arbeitsfahrzeuges ist es von besonderem Vorteil, eine Sensorik vorzusehen, die einen vom Wenderadius abhängigen Wendekurvenwert erfasst. Die Längenverstellung der Koppelelemente erfolgt dann in Abhängigkeit des Wendekurvenwertes derart, dass die seitliche Stellung des Arbeitsgerätes in Bezug auf das Arbeitsfahrzeug an die Wendekurve angepasst wird. Zur gezielten Anpassung der Gerätestellung an die Wendekurve werden die Geometrien des Arbeitsgerätes und des Arbeitsfahrzeugs berücksichtigt. Aus dem jeweiligen Wendekurvenwert wird das Ausmaß der für einen optimalen Bahnradius erforderlichen Verschiebung oder des Verschwenkens des Anbaugerätes errechnet.

Vorzugsweise enthält die Sensorik wenigstens einen Lenkwinkelsensor, der beispielsweise den Ausschlag des Lenkrades oder den Ausschlag eines oder mehrerer der gelenkten Räder erfasst und dessen Signale für die automatische Nachführung des Arbeitsgerätes herangezogen werden. Die Steuerung ermittelt aus dem Lenkwinkel der Räder den jeweiligen Wenderadius des Arbeitsfahrzeugs. Unter Berücksichtigung der Geometrie des Arbeitsfahrzeugs und des Arbeitsgerätes errechnet die Steuerung die Verschiebung oder den Schwenkwinkel des Arbeitsgerätes relativ zum Arbeitsfahrzeug, die erforderlich ist, um das Arbeitsgerät auf die Wendekurve des Arbeitsfahrzeugs auszurichten, so dass der Wenderadius des Gesamtsystems, bestehend aus Arbeitsfahrzeug und Arbeitsgerät, verringert wird.

Ein weiteres bevorzugtes Verfahren zur Ermittlung des tatsächlichen Wenderadius während eines Wendemanövers basiert auf der Erfassung der seitlichen Beschleunigung des Arbeitsfahrzeugs. Zu diesem Zweck enthält die Sensorik vorzugsweise wenigstens einen Beschleunigungsgeber oder Beschleunigungssensor, der die seitliche Beschleunigung des Arbeitsfahrzeugs erfasst. Hierfür geeignete Sensoren werden beispielsweise durch die Fa. Hottinger Baldwin Messtechnik (HBM), Deutschland vertrieben. Die Längen der längenverstellbaren Koppelelemente werden durch die Steuerungsmittel in Abhängigkeit der seitlichen Beschleunigung des Arbeitsfahrzeugs automatisch eingestellt bzw. nachgeführt. Aus der seitlichen Beschleunigung $a_n$ und der gemessenen tatsächliche Geschwindigkeit des Arbeitsfahrzeugs $v$ lässt sich der Wenderadius $R$ des Arbeitsfahrzeugs nach der Formel $R=\frac{v^2}{a_n}$ ermitteln. Aus den so ermittelten Istwerten für die Wenderadien, wird das Arbeitsgerät, wie bereits beschrieben, an die Wendekurve angepasst.

Ein weiterer vorteilhafter Anwendungsfall der vorliegenden Erfindung ist darin zu sehen, das sich durch die automatische seitliche Einstellung des Arbeitsgerätes der Schwerpunktes des Gesamtsystems, bestehend aus Arbeitsfahrzeug und Arbeitsgerät, einstellen lässt. Die Einleitung gezielter seitlicher Verschiebungen ermöglicht die Verbesserung der Stabilität des Gesamtsystems während der Fahrt. Zweckmäßigerweise wird der Gesamtschwerpunkt bei Kurvenfahrt zum Kurveninneren verschoben. Besonders vorteilhaft wirkt sich die Schwerpunktsverschiebung bei der Fahrt am Hang aus, da das Umkippmoment gezielt durch die Verlagerung des Gesamtschwerpunktes verkleinert werden kann, was eine Stabilitätserhöhung nach sich zieht. Bei Hangfahrt wird der Gesamtschwerpunkt von der Talseite weiter zur Bergseite verschoben, in dem die seitliche Lage des Arbeitsgerätes entsprechend automatisch eingestellt wird.

Zu diesem Zweck enthält die Sensorik vorzugsweise wenigstens einen Neigungswinkelgeber zur Erfassung der seitlichen Neigung des Arbeitsfahrzeugs. Durch die Steuerungsmittel werden die Länge der längenverstellbaren Koppelelemente und damit die seitliche Verschiebung bzw. der Verschwenkwinkel des Arbeitsgerätes in Abhängigkeit der seitlichen Neigung, insbesondere dem Neigungswinkel φ des Arbeitsfahrzeugs automatisch derart eingestellt bzw. nachgeführt, dass die Lage des Gesamtschwerpunktes von Arbeitsfahrzeug und Arbeitsgerät seitlich angepasst wird.

Ergänzend oder alternativ hierzu ist es auch von Vorteil, wenn die Sensorik Mittel zur Erfassung der Aufstandskräfte an den Rädern des Arbeitsfahrzeugs enthält. Vorzugsweise werden die Aufstandskräfte der beiden Fahrzeughinterräder gemessen. Durch die Steuerungsmittel werden die Länge der längenverstellbaren Koppelelemente und damit die seitliche Verschiebung bzw. der Verschwenkwinkel des Arbeitsgerätes in Abhängigkeit der Verteilung der Aufstandskräfte automatisch derart eingestellt bzw. nachgeführt, dass die Lage des Gesamtschwerpunktes von Arbeitsfahrzeug und Arbeitsgerät seitlich angepasst wird.

Zur Erfassung der Aufstandkräfte werden vorzugsweise an den betroffenen Radachsen Dehnmessstreifen angeordnet, deren Signale durch die Steuerungsmittel ausgewertet werden.

Eine bevorzugte Weiterbildung der Erfindung sieht vor, bei der automatischen Einstellung der Koppelelemente die Fahrgeschwindigkeit des Arbeitsfahrzeugs zu berücksichtigen. Zu diesem Zweck ist wenigstens ein Geschwindigkeitssensor vorgesehen, der laufend einen der Fahrgeschwindigkeit des Arbeitsfahrzeugs entsprechenden Wert erfasst. Dieser Wert wird durch die Steuerungsmittel bei der Einstellung der Koppelelementlänge, die ein seitliches Verschwenken und/oder ein seitliches Verschieben des Arbeitsgerätes zur Folge hat, berücksichtigt. Vorzugsweise wird mit zunehmender Fahrgeschwindigkeit die Anpassungsgeschwindigkeit, mit der die Koppelelemente auf einen sich ändernden Kurvenradius eingestellt werden, begrenzt. Dies bedeutet, dass bei höheren Fahrzeuggeschwindigkeiten die Koppelelemente langsamer ein- und ausgefahren werden, als es der Kurvenradiusänderung entspricht.

Um die Stabilität des Gesamtsystems zu gewährleisten und Sicherheitsrisiken zu vermeiden, sollte eine automatische Einstellung der seitlichen Lage des Arbeitsgerätes nur bei relativ langsamen Fahrgeschwindigkeiten, erfolgen, wie sie insbesondere beim Fahren im Hofbereich auftreten. Eine bevorzugte Ausgestaltung der Erfindung sieht daher vor, dass bei Überschreiten eines vorgebbaren Geschwindigkeitswertes, beispielsweise von 20 km/h, die automatische seitliche Nachführung des Arbeitsgeräts automatisch deaktiviert wird. Wird bei seitlich ausgelenktem Arbeitsgerät der vorgebbare Geschwindigkeitswert überschritten, so wird das Arbeitsgerät automatisch in seine Grundstellung zurückbewegt. Diese Rückführung erfolgt relativ langsam, um keine abrupten Schwerpunktsverlagerungen auszulösen.

Vorzugsweise ist wenigstens eine durch die Bedienungsperson betätigbare Eingabevorrichtung vorgesehen, durch welche die Funktion der automatischen Nachführung aktivierbar und deaktivierbar ist. Die Bedienungsperson kann somit selbst bestimmen, für welche Arbeits- oder Transportfahrtbedingungen die automatische Nachführung aktiv sein soll. Sie kann die Aktivierung beispielsweise dann vornehmen, wenn eine Transportfahrt mit einem ausladenden Arbeitsgerät bei geringeren Geschwindigkeiten erfolgen soll und/oder wenn bei montiertem Arbeitsgerät Geländefahrten an steilen Hängen beabsichtigt sind. Aus Sicherheitsgründen sollte eine Verriegelung vorgesehen sein, die die Aktivierung der automatischen Nachführung nur im Stillstand des Fahrzeugs ermöglicht.

Es kann auch zweckmäßig sein, zwei durch die Bedienungsperson betätigbare Eingabevorrichtungen vorzusehen. Durch eine erste Eingabevorrichtungen lässt sich die automatische Nachführung in Abhängigkeit des Wendekurvenwertes, insbesondere des Lenkwinkels, aktivieren bzw. deaktivieren und durch eine zweite Eingabevorrichtung lässt sich die automatische Nachführung in Abhängigkeit der Fahrzeugneigung bzw. der Aufstandskräfte aktivieren bzw. deaktivieren.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1 einen Ackerschlepper mit erfindungsgemäßer Steuervorrichtung,

Fig. 2 das Blockschaltbild einer erfindungsgemäßen Steuervorrichtung,

Fig. 3 die Aufsicht auf einen Ackerschlepper mit angebautem Arbeitsgerät bei Kurvenfahrt,

Fig. 4 einen Ackerschlepper von hinten,

Fig. 5 einen Ackerschlepper mit angebautem Arbeitsgerät von oben und

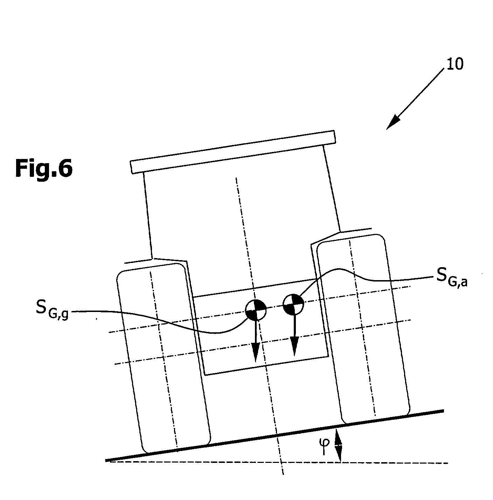

Fig. 6 einen Ackerschlepper von hinten bei Hangfahrt.

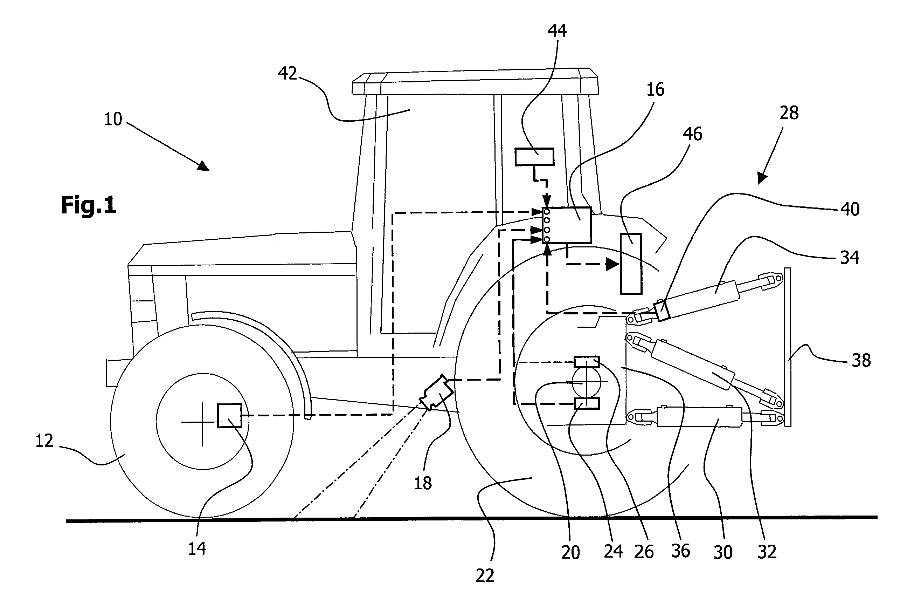

Bei dem in Fig. 1 dargestellten Ackerschlepper 10 handelt es sich um einen Standardschlepper, wie er insbesondere für landwirtschaftliche Zwecke verwendet wird. Am nicht näher dargestellten Lenkgestänge der Vorderräder 12 ist ein Lenkwinkelgeber 14 montiert, aus dessen Messwerten sich der Wenderadius und seitliche Bewegungsgrößen des Ackerschleppers 10 ableiten lassen. Alternativ oder ergänzend zum Lenkwinkelgeber 14 kann auch ein nicht dargestellter Beschleunigungsgeber zur Erfassung der seitlichen Beschleunigungskomponenten des Ackerschleppers vorgesehen sein. Die elektrischen Signale des Lenkwinkelgebers 14 bzw. des Beschleunigungsgebers werden über elektrische Leitungen, die als gestrichelte Linien dargestellt sind, einer elektrischen Steuereinheit 16 zugeführt.

Die Steuereinheit 16 empfängt des weiteren elektrische Signale von einem Geschwindigkeitsgeber 18, der die Fahrzeuggeschwindigkeit erfasst. Im vorliegenden Ausführungsbeispiel handelt es sich bei dem Geschwindigkeitsgeber 18 um einen Radarsensor. Es können jedoch auch andere Geschwindigkeitsgeber, wie beispielsweise im Fahrzeugantriebsstrang angeordnete Drehzahlgeber, verwendet werden.

An der Hinterradachse 20 des Ackerschleppers 10 ist eine Sensorik angeordnet, durch die sich die Aufstandskräfte der Hinterräder 22 messen lassen. Die Sensorik enthält beispielsweise Dehnmessstreifen 24, 26, die auf die nicht näher dargestellten Achsrichter aufgeklebt sind und deren elektrischen Signale der Steuereinheit 16 zugeführt werden.

Im Heckbereich des Ackerschleppers 10 befindet sich eine Anbauschnittstelle 28, die der Aufnahme von in Fig. 1 nicht dargestellten Anbaugeräten dient. Die Anbauschnittstelle 28 der Fig. 1 enthält sechs doppeltwirkenden Hydraulikzylinder, die nach Art eines Hexapoden angeordnet sind, wie es in der nachveröffentlichten deutschen Patentanmeldung 199 51 840.8 näher beschrieben wurde. Zur Vermeidung von Wiederholungen wird hiermit auf diese Beschreibung Bezug genommen. Aus Fig. 1 gehen drei der sechs doppeltwirkenden Hydraulikzylinder 30, 32, 34 hervor, die einenends mit dem Schlepperrumpf 36 und anderen- nends mit einem Koppelrahmen 38 gelenkig verbunden sind. An dem Koppelrahmen 38 sind Anbaugeräte befestigbar.

In die Hydraulikzylinder 30, 32, 34 der Hexapod-Anordnung sind Weggeber 40 integriert, von denen lediglich einer dargestellt wurde. Die Weggeber 40 stellen elektrische, der Ausfahrlänge des jeweiligen Hydraulikzylinders 30, 32, 34 entsprechende Signale bereit, die an die Steuereinheit 16 übermittelt werden.

In der Kabine 42 des Ackerschleppers ist eine durch die Bedienungsperson betätigbare Bedienungseinrichtung 44 angeordnet. Diese enthält einen Aktivierungsschalter, durch den sich die erfindungsgemäße Steuereinrichtung ein- oder ausschalten lässt. Die Bedienungseinrichtung 44 kann auch zwei Eingabevorrichtungen, beispielsweise Kippschalter oder Druckknopfschalter, enthalten, wobei ein erster Schalter vorgesehen sein kann, um eine automatische Nachführung in Abhängigkeit des Lenkwinkels zu aktivieren bzw. zu deaktivieren, und ein zweiter Schalter vorgesehen sein kann, um eine automatische Nachführung in Abhängigkeit der Fahrzeugneigung und/oder der Aufstandskräfte der Fahrzeugräder zu aktivieren bzw. zu deaktivieren. Die von der Bedienungseinrichtung 44 bereitgestellten elektrischen Signale werden ebenfalls an die Steuereinheit 16 übermittelt.

Die Steuereinheit 16 ermittelt aus den empfangenen elektrischen Signalen Sollwerte für die Verschiebung und/oder für das Verschwenken des Anbaugerätes relativ zum Ackerschlepper 10. Sie gibt Steuersignale an Proportionalventile 46 aus, die jedem Hydraulikzylinder 30, 32, 34 zugeordnet sind. Von den Proportionalventilen 46 ist lediglich eines dargestellt. Durch die Proportionalventile 46 lassen sich Ölmengen für die Hydraulikzylinder 30, 32, 34 einstellen, um diese aus- und einzufahren. Bei der Sollwertberechnung werden Parameter des Ackerschleppers und des Anbaugeräts berücksichtigt, wie: Länge, Breite, Spurweite, Radabstand, Indexradius der Räder und Schwerpunktslagen. Mit diesen Parametern lässt sich die Steuereinheit 16 programmieren.

Die Ist-Lage der seitlichen Arbeitsgeräteverschiebung lässt sich aus den Messwerten der Weggeber 40 ermitteln, so dass die Steuereinheit 16 einen Soll-Ist-Abgleich vornehmen kann, um Regelabweichungen zu ermitteln, aus denen sich Steuersignale für die Proportionalventile 46 berechnen lassen.

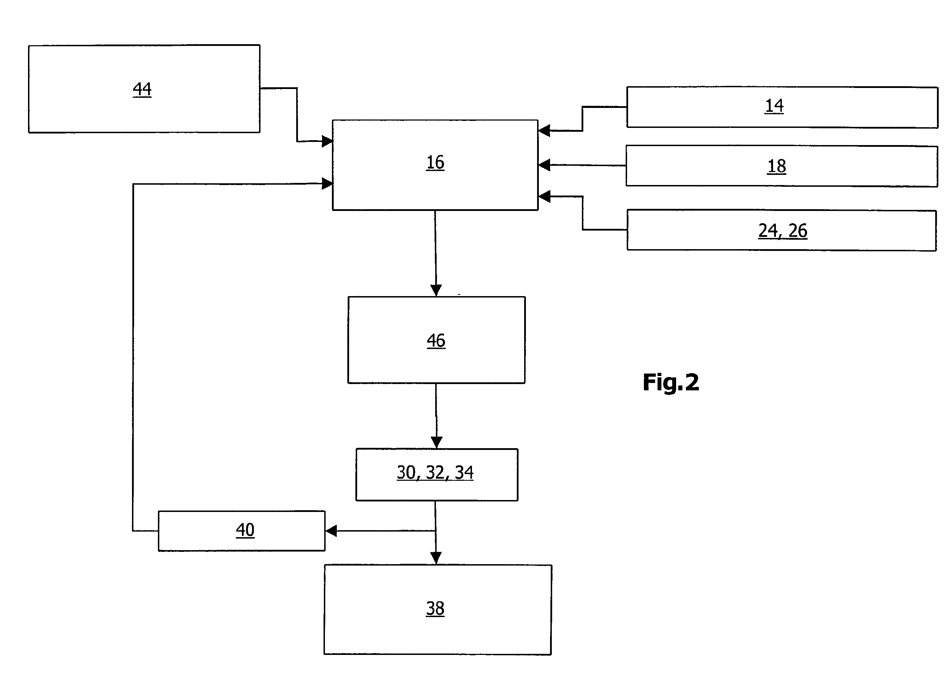

Die einzelnen Komponenten der erfindungsgemäßen Steuervorrichtung sind in dem Blockdiagramm der Fig. 2 dargestellt.

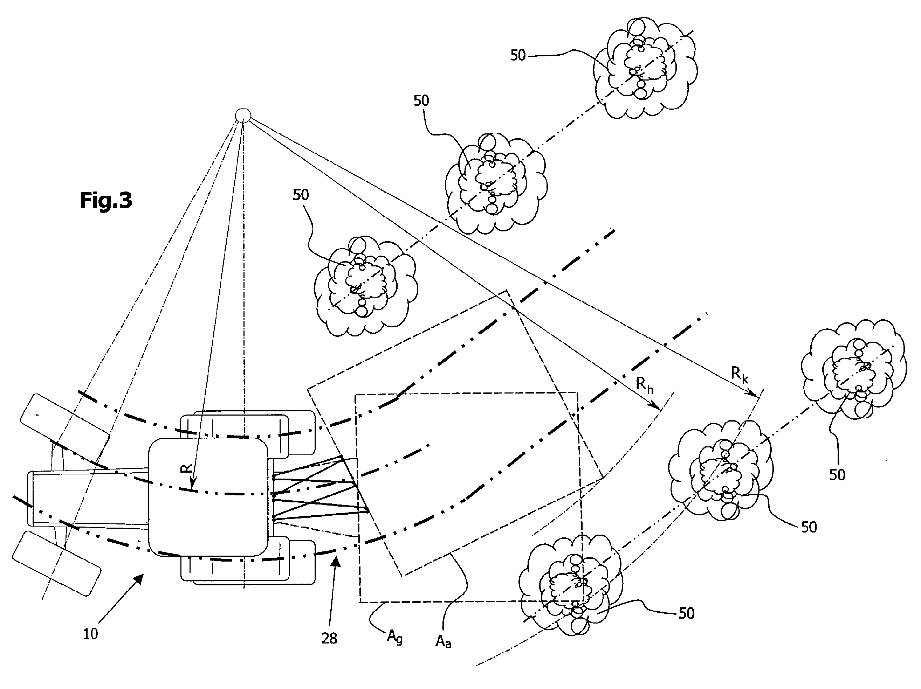

Die Steuereinheit enthält einen Verriegelungskreis, der eine Aktivierung der erfindungsgemäßen Steuervorrichtung nur bei stehendem Ackerschlepper ermöglicht. Ob sich der Ackerschlepper bewegt, kann anhand der Signale des Geschwindigkeitsgebers 18 festgestellt werden. Durch Betätigung des Aktivierungsschalters der Bedienungseinrichtung 44 kann die Bedienungsperson bei stehendem Fahrzeug die Steuervorrichtung aktivieren. Ist dies erfolgt, so ermittelt die Hexapod-Steuereinheit 16 aus den Messsignalen des Lenkwinkelgebers 14 laufend einen Wert für den zugehörigen Wenderadius R (siehe Fig. 3). Aus dem Wert des Wenderadius R berechnet die Steuereinheit 16 die Längen der Hydraulikzylinder 30, 32, 34 der Hexapod-Anordnung, die erforderlich sind, um das Anbaugerät aus seiner Grundstellung, die in Fig. 3 mit $A_g$ bezeichnet ist, in eine Auslenkstellung, die in Fig. 3 mit $A_a$ bezeichnet ist, zu bringen. Die Auslenkstellung $A_a$ ist dadurch gekennzeichnet, dass das Anbaugerät A eine relative Lage zum Ackerschlepper 10 einnimmt, die an den Wenderadius R angepasst ist.

Fährt bei nicht aktivierter Steuervorrichtung der in Fig. 3 dargestellte Ackerschlepper 10 mit einem gekoppelten Anbaugerät A durch eine Kurve, so behält das Anbaugerät seine Grundstellung $A_g$ bei. Im dargestellten Ausführungsbeispiel fluchtet es weiterhin mit der Fahrzeugausrichtung. Es ist dabei ein äußerer Bahnradius $R_K$ erforderlich. Ist hingegen die erfindungsgemäße Steuervorrichtung aktiv, so wird das Anbaugerät $A_a$ durch die Hexapod-Anordnung hinsichtlich des Bahnradius R nach innen verschwenkt, wodurch lediglich ein reduzierter Bahnradius $R_H$ erforderlich ist. In letzterem Fall bleibt das Anbaugerät $A_a$ annähernd in der Spur des Ackerschleppers 10. Es schert seitlich nicht, oder nicht wesentlich aus. Dadurch können Kollisionen mit Hindernissen 50 vermieden werden.

Statt des Verschwenkens des Anbaugerätes A, wie es im wesentlichen aus Fig. 3 hervorgeht, kann es bei bestimmten Anwendungsfällen auch zweckmäßig sein, das Anbaugerät A relativ zum Ackerschlepper seitlich zu verschieben oder eine Mischung aus Verschiebung und Verschwenken vorzusehen.

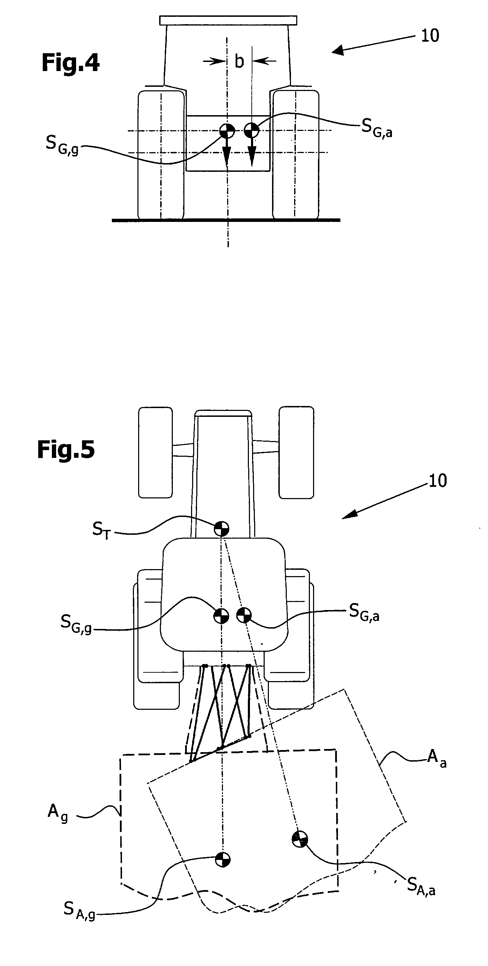

Beim seitlichen Verschwenken oder Verschieben des Anbaugerätes A wandert die Lage des Schwerpunktes für das Gesamtsystem, bestehend aus Ackerschlepper 10 und gekoppeltem Anbaugerät A, seitlich aus. In den Figuren 4 und 5 wurden der Schlepperschwerpunkt $S_T$, Anbaugeräteschwerpunkte $S_{A,g}$ und $S_{A,a}$ und Gesamtsystemschwerpunkte $S_{G,g}$ und $S_{G,a}$ angedeutet. Der Indize g steht dabei für Grundstellung und der Indize a steht für ausgelenkte Stellung. Es ist ersichtlich, dass sich bei Kurvenfahrt der Schwerpunkt des Gesamtsystems hinsichtlich der Bahnkurve um einen Betrag b nach innen verlagert, was sich positiv auf die Fahrstabilität auswirkt.

Um den Schwerpunkt $S_G$ des Gesamtsystems günstig zu beeinflussen, berücksichtigt die Steuereinheit 16 bei der Berechnung der Steuersignale für die Proportionalventile 46 die Messwerte der Dehnungsmessstreifen 24, 26. Herrschen auf einer Fahrzeugseite überhöhte Aufstandskräfte, so wird das Anbaugerät seitlich verschwenkt oder verschoben, so dass ein Ausgleich der Aufstandskräfte der beiden Fahrzeugseiten erfolgt.

Die Steuervorrichtung kann auch einen nicht näher dargestellten Neigungswinkelgeber enthalten, der den seitlichen Neigungswinkel φ des Ackerschleppers 10 bei Hangfahrt erfasst. In Abhängigkeit des Neigungswinkels φ wird das Anbaugerät A seitlich verschwenkt oder verschoben, um den Schwerpunkt $S_G$ des Gesamtsystems zur Bergseite zu verschieben.

Die Steuereinheit 16 berücksichtigt die Signale des Geschwindigkeitsgebers 18 bei der Berechnung der Steuersignale für die Proportionalventile in der Weise, dass bei höheren Fahrgeschwindigkeiten die seitliche Bewegung des Anbaugerätes lediglich langsam an die Anforderungen angepasst wird, so dass die Fahrstabilität nicht durch eine rasche seitliche Anbaugeräteverschiebung beeinträchtigt wird. Wenn die Fahrzeuggeschwindigkeit einen vorgebbaren Wert, beispielsweise 20 km/h überschreitet, erzeugt die Steuereinheit Steuersignale für die Proportionalventile, durch die das Anbaugerät wieder in seine Grundstellung zurückgeführt wird. Die Rückführung erfolgt mit einem Zeitverhalten, das sich nicht nachteilig auf die Fahrstabilität des Gesamtsystems auswirkt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

**Patentansprüche**

1. Steuervorrichtung für eine Anbauschnittstelle (28) zur Kopplung eines Arbeitsgerätes (A) an ein Arbeitsfahrzeug (10), die wenigstens ein längenverstellbares Koppelelement (30, 32, 34) enthält, durch das sich das Arbeitsgerät (A) insbesondere in seitlicher Richtung relativ zum Arbeitsfahrzeug (10) bewegen lässt, **gekennzeichnet durch** eine Sensorik (14), welche seitliche Bewegungen des Arbeitsfahrzeugs (10) direkt oder indirekt erfasst, und **durch** Steuerungsmittel (16), welche die Länge des wenigstens einen längenverstellbaren Koppelelements (30, 32, 34) in Abhängigkeit der Sensorsignale automatisch einstellen.

2. Steuervorrichtung nach Anspruch 1, **dadurch gekennzeichnet, dass** zwischen Arbeitsfahrzeug (10) und Arbeitsgerät (A) wenigstens sechs längenverstellbare Koppelelemente (30, 32, 34) nach Art eines Hexapoden angeordnet sind.

3. Steuervorrichtung nach Anspruch 1 oder 2, **dadurch gekennzeichnet, dass** die Sensorik (14) einen vom Wenderadius abhängigen Wendekurvenwert erfasst und dass die Längenverstellung der Koppelelemente (30, 32, 34) in Abhängigkeit des Wendekurvenwertes derart erfolgt, dass die seitliche Stellung des Arbeitsgerätes (A) an die Wendekurve angepasst wird.

4. Steuervorrichtung nach einem der Ansprüche 1 bis 3, **dadurch gekennzeichnet, dass** die Sensorik wenigstens einen Lenkwinkelsensor (14) enthält, dessen Signale ,für die Nachführung des Arbeitsgerätes (A) herangezogen werden.

5. Steuervorrichtung nach einem der Ansprüche 1 bis 4, **dadurch gekennzeichnet, dass** die Sensorik wenigstens einen Beschleunigungsgeber zur Erfassung der seitlichen Beschleunigung des Arbeitsfahrzeugs (10) enthält und dass durch die Steuerungsmittel (16) die Längen der längenverstellbaren Koppelelemente (30, 32, 34) in Abhängigkeit der seitlichen Beschleunigung des Arbeitsfahrzeugs (10) automatisch eingestellt werden.

6. Steuervorrichtung nach einem der Ansprüche 1 bis 5, **dadurch gekennzeichnet, dass** die Sensorik wenigstens einen Neigungswinkelgeber zur Erfassung der seitlichen Neigung des Arbeitsfahrzeugs (10) enthält und dass durch die Steuerungsmittel (16) die Länge der längenverstellbaren Koppelelemente (30, 32, 34) in Abhängigkeit der seitlichen Neigung des Arbeitsfahrzeugs (10) automatisch eingestellt werden.

7. Steuervorrichtung nach einem der Ansprüche 1 bis 6, **dadurch gekennzeichnet, dass** die Sensorik Mittel (24, 26) zur Erfassung der Aufstandskräfte an Rädern (22) des Arbeitsfahrzeugs (10) enthält und dass durch die Steuerungsmittel (16) die Länge der längenverstellbaren Koppelelemente (30, 32, 34) in Abhängigkeit der Verteilung der Aufstandskräfte derart automatisch eingestellt, dass die Lage des Gesamtschwerpunktes $(S_G)$ von Arbeitsfahrzeug (10) und Arbeitsgerät (A) seitlich angepasst wird.

8. Steuervorrichtung nach Anspruch 7, **dadurch gekennzeichnet, dass** zur Erfassung der Aufstandkräfte Dehnmessstreifen (24, 26) an den betroffenen Radachsen (20) angeordnet sind.

9. Steuervorrichtung nach einem der Ansprüche 1 bis 8, **dadurch gekennzeichnet, dass** wenigstens ein Geschwindigkeitssensor (18) zur Erfassung eines der Fahrgeschwindigkeit des Arbeitsfahrzeugs (10) entsprechenden Wertes vorgesehen ist und dass die Einstellung der Koppelelementlänge in Abhängigkeit der Fahrzeuggeschwindigkeit erfolgt.

10. Steuervorrichtung nach Anspruch 9, **dadurch gekennzeichnet, dass** durch die Steuerungsmittel (16) mit zunehmender Fahrgeschwindigkeit die Geschwindigkeit der seitlichen Relativbewegung zwischen Arbeitsgerät (A) und Arbeitsfahrzeug (10) begrenzt wird.

11. Steuervorrichtung nach Anspruch 9 oder 10, **dadurch gekennzeichnet, dass** bei Überschreiten eines vorgebbaren Geschwindigkeitswertes die automatische seitliche Nachführung des Arbeitsgeräts (A) automatisch deaktiviert wird.

12. Steuervorrichtung nach einem der Ansprüche 1 bis 11, **dadurch gekennzeichnet, dass** wenigstens eine Eingabevorrichtung (44) vorgesehen ist, durch welche die Funktion der automatischen Nachführung aktivierbar und deaktivierbar ist.

13. Steuervorrichtung nach einem der Ansprüche 1 bis 12, **dadurch gekennzeichnet, dass** wenigstens eine erste Eingabevorrichtung vorgesehen ist, durch die sich die automatische Nachführung in Abhängigkeit des Wendekurvenwertes aktivieren bzw. deaktivieren lässt, und dass wenigstens eine zweite Eingabevorrichtung vorgesehen ist, durch die sich die automatische Nachführung in Abhängigkeit der Fahrzeugneigung und/oder der Aufstandskräfte der Fahrzeugräder aktivieren bzw. deaktivieren lässt.

**Fig.1**

Fig.2

Fig.3

EP 1 243 171 A2

**Fig.4**

**Fig.5**

Fig.6